# EUROPEAN PATENT SPECIFICATION

(11) **EP 3 620 686 B1**
(45) Date of publication and mention of the grant of the patent: **19.04.2023**
(21) Application number: 19190909.2
(22) Date of filing: 09.08.2019
(51) Int. Cl.: F16H 57/00, F16H 57/023, H02K 7/116, F16H 1/32

(54) **GEAR MOTOR**
GETRIEBEMOTOR
MOTEUR À ENGRENAGES

(30) Priority: 10.09.2018 JP 2018168512
(43) Date of publication of application: 11.03.2020
(73) Proprietor: Sumitomo Heavy Industries, Ltd., Tokyo 141-6025 (JP)
(72) Inventor: TAMURA, Mitsuhiro, Kanagawa,, 237-8555, (JP); YAMAMOTO, Akira, Kanagawa,, 237-8555, (JP)
(74) Representative: Louis Pöhlau Lohrentz

(56) References cited:
- EP-A1- 1 563 966
- CN-A- 106 015 469
- JP-A- 2005 127 346
- JP-B2- 6 059 643
- JP-U- S61 200 929

## Description

### BACKGROUND OF THE INVENTION

### Field of the Invention

The present invention relates to a gear motor.

### Description of Related Art

In Japanese Unexamined Patent Publication No. 2014-92183, the present applicant discloses a reduction gear which reduces speed of rotation input from a drive source so as to transmit reduced speed to a matching machine. The reduction gear disclosed in Japanese Unexamined Patent Publication No. 2014-92183 has an input shaft which can be joined to a motor shaft on a motor side in an axial direction. An eccentric-rotation type planetary differential reduction gear speed reducer disclosed in European Patent Publication No. 1563966 has an input shaft which is coupled to a motor shaft of a servo motor. Japanese Utility Model No. S61-200929 discloses an extension structure of a rotating shaft. Japanese Patent No. 6059643 discloses a speed reducer which has an input shaft having a motor shaft insertion hole into which a motor shaft is inserted. Japanese Unexamined Patent Publication No. 2005-127346 discloses a hollow motor with a hollow reduction gear that is installed through a hollow reduction gear portion and a hollow motor portion.

### SUMMARY OF THE INVENTION

Japanese Unexamined Patent Publication No. 2014-92183 describes that the input shaft of the reduction gear is joined to the motor shaft by a spline. However, if a joint portion joined by the spline is subjected to clearance fitting, rattling occurs due to a gap between one shaft and the other shaft, thereby causing a possibility that rotation accuracy of the reduction gear may be degraded. On the other hand, if the joint portion joined by the spline is subjected to interference fitting, when one shaft is pressed into the other shaft, an unnecessary force is applied to a bearing for supporting the shafts, thereby causing a possibility that the bearing may be damaged.

Therefore, work for joining the shafts is not always easy. For these reasons, the present inventors recognize that there is room for improvement in the related art from a viewpoint of facilitating the work for joining the input shaft and the motor shaft to each other in the speed reducer.

In view of the above-described problem, embodiments of the present invention aim to provide a gear motor in which an input shaft of a speed reducer and a motor shaft can be easily joined to each other.

According to an aspect of the present invention, in order to solve the above-described problem, there is provided a gear motor including a motor disposed on an input side which is one side in an axial direction, a speed reducer disposed on a counter-input side which is the other side in the axial direction, and a joining member located between a motor shaft of the motor and an input shaft of the speed reducer. The speed reducer is driven by the motor via the joining member. An axial end surface of the motor shaft closest to the speed reducer (10) is disposed closer to the input side than an axial end surface of the input shaft (12) closest to the motor (50). At least one shaft of the motor shaft and the input shaft has a first hollow portion penetrating in the axial direction. The joining member (70) and the one shaft of the motor shaft (60) and the input shaft (12) are joined to each other. The other shaft of the motor shaft and the input shaft, and the joining member are joined to each other by a bolt exposed to the first hollow portion.

Further advantageous embodiments of the invention are laid down in the dependent claims.

According to the present invention, it is possible to provide the gear motor in which the input shaft of the speed reducer and the motor shaft can be easily joined to each other.

### BRIEF DESCRIPTION OF THE DRAWINGS

FIG. 1 is a side sectional view illustrating a gear motor according to a first embodiment of the present invention.
FIG. 2 is an enlarged side sectional view illustrating a periphery of a joining member in FIG. 1.
FIG. 3 is a side sectional view illustrating a periphery of a joining member of a gear motor according to a second embodiment of the present invention.
FIG. 4 is a side sectional view illustrating a periphery of a joining member of a gear motor according to a third embodiment of the present invention.

### DETAILED DESCRIPTION OF THE INVENTION

Hereinafter, preferred embodiments according to the present invention will be described with reference to the respective drawings. In embodiments, comparative examples, and modification examples, the same reference numerals will be given to the same or equivalent configuration elements or members, and repeated description will be appropriately omitted. Dimensions of the members in the respective drawings are appropriately enlarged or reduced in the illustration in order to facilitate understanding. In the respective drawings, the members which are not important in describing the embodiments will be partially omitted in the illustration. Terms including ordinal numbers such as first and second are used in order to describe the configuration elements in various ways. However, the terms are used only for the purpose of distinguishing one configuration element from other configuration elements. The terms do not limit the configuration elements.

### [First Embodiment]

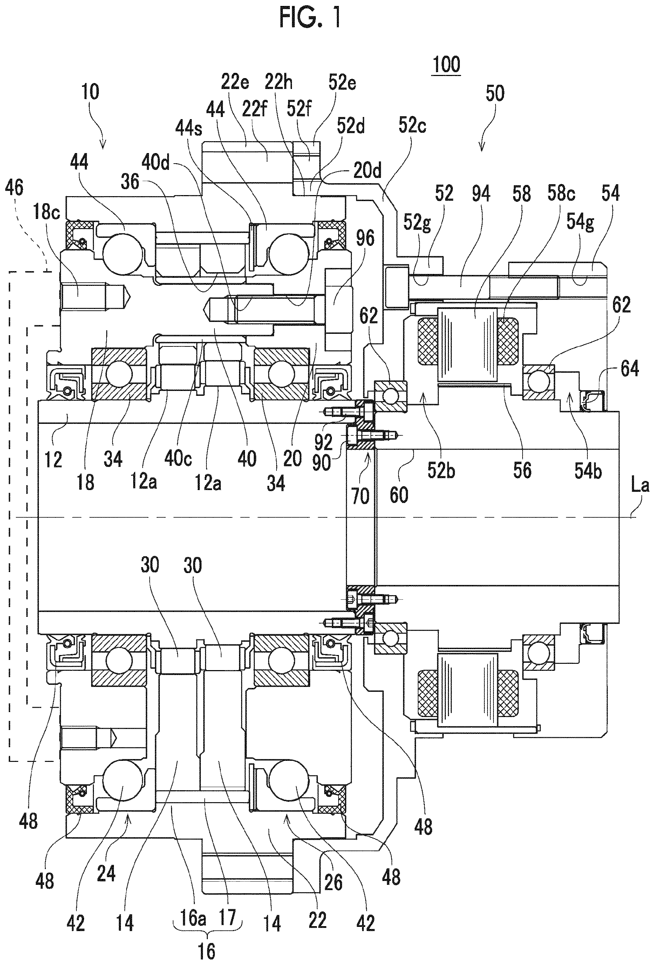

A configuration of a gear motor 100 according to a first embodiment will be described with reference to FIG. 1. FIG. 1 is a side sectional view illustrating the gear motor 100 according to the first embodiment of the present invention. The gear motor 100 has a motor 50 that inputs rotation to a speed reducer 10, a speed reducer 10 that reduces speed of the input rotation and outputs the rotation, and a joining member 70. The motor 50 has a motor shaft 60 for outputting the rotation to the speed reducer 10. The speed reducer 10 has an input shaft 12 to which the rotation is input from the motor 50. The joining member 70 is located between the motor shaft 60 of the motor 50 and the input shaft 12 of the speed reducer 10.

Hereinafter, a direction along a central axis La of the motor shaft 60 will be referred to as an "axial direction". A circumferential direction and a radial direction of a circle centered on the central axis La will be respectively referred to as a "circumferential direction" and a "radial direction". Hereinafter, for the sake of convenience, one side (right side in the drawing) in the axial direction will be referred to as an input side, and the other side (left side in the drawing) will be referred to as a counter-input side.

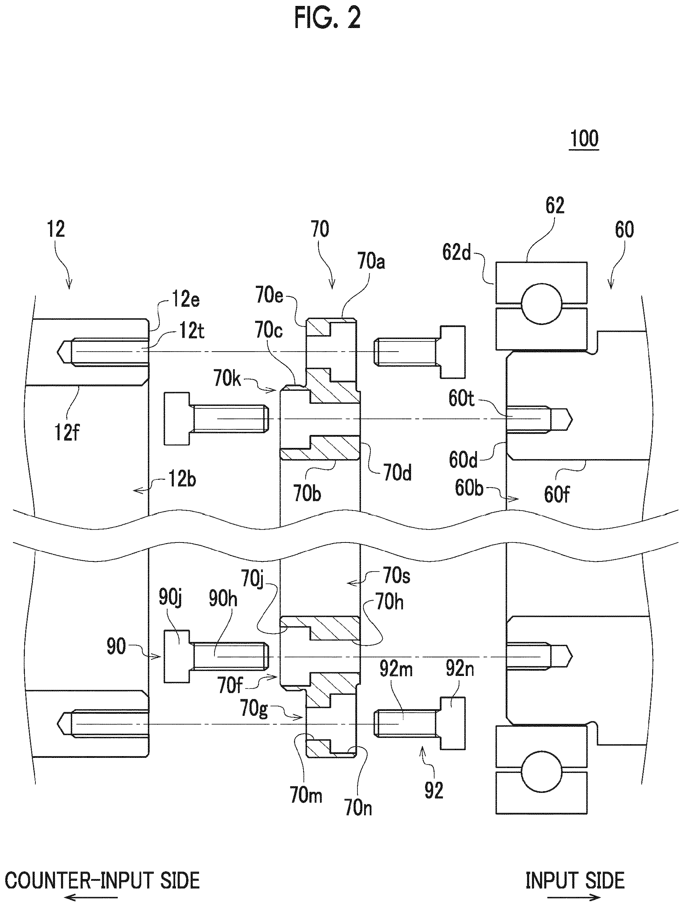

FIG. 2 is an enlarged side sectional view illustrating a periphery of the joining member 70. At least one shaft of the motor shaft 60 and the input shaft 12 has a first hollow portion penetrating in the axial direction. The joining member 70 has a second hollow portion communicating with the first hollow portion of one shaft, and the other shaft has a third hollow portion communicating with the second hollow portion of the joining member 70. In the first embodiment, the input shaft 12 will be described as an example of one shaft, and the motor shaft 60 will be described as an example of the other shaft. In the present embodiment, the input shaft 12 has an input shaft hollow portion 12b penetrating in the axial direction. The motor shaft 60 has a motor shaft hollow portion 60b penetrating in the axial direction. The joining member 70 has a joint hollow portion 70s penetrating in the axial direction. In the first embodiment, the input shaft hollow portion 12b will be described as an example of the first hollow portion. The motor shaft hollow portion 60b will be described as an example of the third hollow portion. The joint hollow portion 70s will be described as an example of the second hollow portion.

As illustrated in FIGS. 1 and 2, the joining member 70 has the joint hollow portion 70s (second hollow portion) communicating with the input shaft hollow portion 12b (first hollow portion) of the input shaft 12 (one shaft). The motor shaft 60 (the other shaft) has the motor shaft hollow portion 60b (third hollow portion) communicating with the joint hollow portion 70s (second hollow portion) of the joining member 70. In this case, the respective hollow portions communicate with each other in the axial direction. Accordingly, wires (not illustrated) can be laid out through the respective hollow portions.

### (Joining Member)

The joining member 70 will be described. The joiningmember 70 is located between the motor shaft 60 and the input shaft 12 so as to join both of these to each other. The joining member 70 according to the present embodiment is a generally circular ring-shaped member having an outer peripheral surface 70a and an inner peripheral surface 70b.

A first end surface 70d is disposed in an end portion on the input side of the joining member 70. A second end surface 70e is disposed in an end portion on the counter-input side of the joining member 70. The first end surface 70d comes into contact with an end surface 60d on the counter-input side of the motor shaft 60. The second end surface 70e comes into contact with an end surface 12e on the input side of the input shaft 12.

The joining member 70 has a first joint portion 70f for being joined to the motor shaft 60. The first joint portion 70f according to the present embodiment is a bolt hole into which a bolt 90 is inserted. The first joint portion 70f has a small diameter portion 70h for accommodating a shaft portion 90h of the bolt 90 and a large diameter portion 70j for accommodating a head portion 90j of the bolt 90. In an example illustrated in FIG. 2, the small diameter portion 70h is open on a first end surface 70d on the input side, and the large diameter portion 70j is open on a second end surface 70e (end surface of a projection portion 70k (to be described later)) on the counter-input side. The small diameter portion 70h and the large diameter portion 70j have a common axis, and communicate with each other.

The joining member 70 has a second joint portion 70g for being joined to the input shaft 12. The second joint portion 70g according to the present embodiment is a bolt hole into which a bolt 92 is inserted, and is located outward of the first joint portion 70f in a radial direction. The second joint portion 70g has a small diameter portion 70m for accommodating a shaft portion 92m of the bolt 92 and a large diameter portion 70n for accommodating a head portion 92n of the bolt 92. The small diameter portion 70m and the large diameter portion 70n have a common axis, and communicate with each other. In the example illustrated in FIG. 2, the small diameter portion 70m is open on the second end surface 70e on the counter-input side, and the large diameter portion 70n is open on the first end surface 70d on the input side.

The other shaft of the motor shaft 60 and of the input shaft 12, and the joining member 70 are joined to each other by the bolt 90 exposed to the first hollow portion. Therefore, as illustrated in FIG. 1, the motor shaft 60 (the other shaft) and the joining member 70 are joined to each other by the bolt 90 exposed to the input shaft hollow portion 12b. Here, the description of "the bolt 90 is exposed to the input shaft hollow portion 12b" means that the bolt 90 is visible from an opening portion (on the counter-input side) of the input shaft hollow portion 12b. The bolt 90 does not need to be located inside the input shaft hollow portion 12b.

In this case, compared to a case where the motor shaft and the input shaft are joinedto each other by means of press-fitting, a force applied to a bearing which supports the shafts can be reduced. Therefore, it is possible to reduce possibilities that the bearing may be damaged. The head portion 90j of the bolt 90 is exposed to the hollow portion 12b of the input shaft 12. Accordingly, the bolt 90 can be easily rotated using a screw fastening tool through the hollow portion 12b. Therefore, the input shaft can be easily joined to the motor shaft.

The joining member 70 according to the present embodiment is a separate member from the motor shaft 60 and the input shaft 12, and has a spigot joint portion 70c which is subjected to spigot fitting to the input shaft 12 (one shaft). The spigot joint portion 70c disposed on an outer peripheral surface of the projection portion 70k projecting to the counter-input side from the second end surface 70e. In this case, compared to a case where the motor shaft and the input shaft are joined to each other by means of clearance fitting, rattling caused by a gap is less likely to occur, and rotation accuracy of the reduction gear can be prevented from being degraded.

The joining member 70 may be subjected to the spigot fitting to the motor shaft 60 (other shaft) . However, the joining member 70 according to the present embodiment is not subjected to the spigot fitting to the motor shaft 60 (other shaft) . In this case, it is possible to increase an adjustable range of an axis of the input shaft 12 (one shaft) and the motor shaft 60 (other shaft).

The joining member 70 serves as a separate member from the motor shaft 60 and the input shaft 12, and a head portion of the bolt joining the joining member 70 and one shaft to each other overlaps the other shaft. In the joining member 70 according to the present embodiment, the head portion 92n of the bolt 92 joining the joining member 70 and the input shaft 12 (one shaft) overlaps the motor shaft 60 (other shaft) when viewed in the axial direction of the motor shaft 60. In this case, a diameter of the joining member 70 can be reduced, compared to a case where the head portion 92n is located outward in the radial direction without overlapping the shaft when viewed in the axial direction. In addition, the motor shaft 60 can retain the bolt 92.

In the example illustrated in FIG. 2, the head portion 90j of the bolt 90 joining the joining member 70 and the motor shaft 60 (other shaft) to each other overlaps the input shaft hollow portion 12b without overlapping the input shaft 12 (one shaft) when viewed in the axial direction of the motor shaft 60. In this case, the head portion 92n can be rotated using a screw fastening tool through the hollow portion.

The joining member 70 regulates axial movement of a bearing which supports the other shaft. The head portion 92n of the bolt 92 according to the present embodiment overlaps a motor bearing 62 when viewed in the axial direction. Therefore, the joining member 70 regulates the axial movement of the motor bearing 62 which supports the motor shaft 60 (other shaft) . In this case, a special mechanism for regulating the axial movement of the motor bearing 62 can be omitted, or this mechanism can be simplified.

A process of joining the input shaft 12 and the motor shaft 60 to each other by using the joining member 70 will be described. A plurality of fastening holes 12t are disposed at a predetermined interval in a circumferential direction on the end surface 12e on the input side of the input shaft 12. The fastening hole 12t is a tap hole disposed at a position corresponding to the second joint portion 70g. The joining member 70 is joined to the input shaft 12 in such a way that the bolt 92 is screwed into the fastening hole 12t by penetrating the second joint portion 70g. In this case, the input side of the joining member 70 is open, and has no obstacle. Accordingly, the bolt 92 can be easily rotated using a fastening tool. Here, a joining tool for joining the input shaft 12 and the joining member 70 to each other is retained by the motor shaft 60. Accordingly, without being limited to the bolt, various joining tools such as a pin can be used. The joining member 70 in a state of being joined to the input shaft 12 is joined to the motor shaft 60 as follows.

A plurality of fastening holes 60t are disposed at a predetermined interval in the circumferential direction on the end surface 60d on the counter-input side of the motor shaft 60. The fastening hole 60t is a tap hole disposed at a position corresponding to the first joint portion 70f. The joining member 70 is joined to the motor shaft 60 in such a way that the bolt 90 is screwed into the fastening hole 60t by penetrating the first joint portion 70f. In this case, the head portion 90j of the bolt 90 is exposed to the hollow portion 12b of the input shaft 12. Accordingly, the bolt 90 can be rotated using a screw fastening tool through the hollow portion 12b. In this way, the joining member 70 is first fixed to one shaft of the motor shaft 60 and the input shaft 12, and the joining member 70 in a state of being fixed to one shaft is fixed to the other shaft. In this manner, the motor shaft 60 and the input shaft 12 can be easily joined to each other. Hereinafter, another configuration of the motor 50 and the speed reducer 10 will be described.

### (Motor)

The motor 50 will be described with reference to FIGS. 1 and 2. As the motor 50, a motor based on various principles can be used without any limitation as long as the motor can output rotation to the speed reducer 10. The motor 50 according to the present embodiment is a brushless DC motor (referred to as an AC servo motor in some cases) . The motor 50 includes the motor shaft 60, a magnet 56, a stator core 58, an armature coil 58c, a first motor housing 52, and a second motor housing 54. The magnet 56 is an annular magnet fixed to an outer periphery of the motor shaft 60. The magnet 56 has a magnetic pole on an outer peripheral surface thereof, thereby configuring a rotor. The stator core 58 has a plurality of teeth which face the outer peripheral surface of the magnet 56 in the radial direction via a magnetic gap therebetween. The armature coil 58c is wound around the plurality of teeth of the stator core 58.

The first motor housing 52 is an annular member which surrounds a portion on the counter-input side of the stator core 58. The second motor housing 54 is an annular member which surrounds a portion on the input side of the stator core 58. Center portions of the motor housings 52 and 54 respectively have motor hollow portions 52b and 54b for penetrating the motor shaft 60. The motor bearings 62 are respectively disposed between the motor housings 52 and 54 and the motor shaft 60. The motor shaft 60 according to the present embodiment is rotatably supported by the two motor bearings 62 separated from each other in the axial direction.

The motor housings 52 and 54 respectively have a cylindrical portion for supporting the outer periphery of the stator core 58. The stator core 58 is fixed to the inner periphery of the motor housing 52, 54 by means of bonding, for example. The first motor housing 52 has an umbrella-shaped cup-like portion 52c which is open on the counter-input side. The cup-like portion 52c has a fitting cylinder portion 52d which surrounds an outer peripheral surface 22h on the input side of a casing 22 of the speed reducer 10, and which is subjected to the spigot fitting to the outer peripheral surface 22h.

The cup-like portion 52c has a disc-shaped collar portion 52e projecting outward in the radial direction from the end portion on the counter-input side of the fitting cylinder portion 52d. The end surface on the counter-input side of the collar portion 52e is formed to be flat, and comes into contact with the end surface on the input side of a flange 22e projecting outward in the radial direction from the casing 22. The collar portion 52e has a through-hole 52f in the axial direction, and the flange 22e has a through-hole 22f in the axial direction. A plurality of the through-holes 22f are provided, some of which communicate with the through-hole 52f, and are fastened using a bolt (not illustrated).

The second motor housing 54 is a substantially circular member for covering the input side of the stator core 58. An oil seal 64 is disposed between the second motor housing 54 and the motor shaft 60. The motor housings 52 and 54 have bolt fastening through-holes 52g and 54g respectively penetrating in the axial direction. The motor housings 52 and 54 are joined to each other by using a bolt 94 inserted into the through-holes 52g and 54g. The bolt 94 may be screwed into one of the through-holes 52g and 54g, or may be screwed into a nut (not illustrated) . In an example illustrated in FIG. 1, the bolt 94 is screwed into a tap formed in the through-hole 54g.

The motor 50 outputs a rotational driving force to the motor shaft 60, based on a known principle, by supplying driving power from a driving device (not illustrated). The motor 50 rotationally drives the input shaft 12 via the joining member 70.

### (Speed Reducer)

The speed reducer 10 will be further described with reference to FIGS. 1 and 2. As the speed reducer 10, various speed reduction mechanisms can be used without any limitation, as long as the speed reduction mechanisms can reduce the speed and output the input rotation. The speed reducer 10 according to the present embodiment is an eccentric oscillating type speed reducer which causes one of an internal gear and an external gear to revolve by causing the external gear engaging with the internal gear to oscillate, and which outputs a generated rotation component from an output member to a driving target member.

The speed reducer 10 mainly includes the input shaft 12, an external gear 14, an internal gear 16, carriers 18 and 20, the casing 22, an inner pin 40, an eccentric bearing 30, and main bearings 24 and 26.

### (Input Shaft)

The input shaft 12 is rotated around a rotation center line by the rotational force input from the motor 50. As described above, the end surface on the input side of the input shaft 12 has the plurality of fastening holes 12t. The fastening hole 12t is a tap hole used for being joined to a driving device disposed in a front stage of the speed reducer 10, such as the motor, the gear motor, and the engine. According to the present embodiment, the fastening hole 12t is used for being joined to the motor shaft 60 of the motor 50. In another use state of the speed reducer 10, the fastening hole 12t is used in order to fix a gear or a pulley which inputs the rotation of the motor.

The speed reducer 10 is a center crank type in which the rotation center line of the input shaft 12 is disposed coaxially with the central axis La. The input shaft 12 according to the present embodiment is an eccentric shaft having a plurality of eccentric portions 12a for causing the external gear 14 to oscillate. The input shaft 12 configured in this way is sometimes called a crankshaft. The axis of the eccentric portion 12a is eccentric with the rotation center line of the input shaft 12. According to the present embodiment, two eccentric portions 12a are provided, and an eccentric phase of the adjacent eccentric portions 12a is shifted as much as 180°.

The input side of the input shaft 12 is supported by the second carrier 20 via an input shaft bearing 34. The counter-input side of the input shaft 12 is supported by the first carrier 18 via the input shaft bearing 34. That is, the input shaft 12 is rotatably supported by the first carrier 18 and the second carrier 20. A configuration of the input shaft bearing 34 is not particularly limited. However, in this example, the input shaft bearing 34 is a ball bearing having a spherical rolling element. The input shaft bearing 34 may be pressurized, or may not be pressurized.

### (External Gear)

The external gear 14 is individually provided corresponding to each of the plurality of eccentric portions 12a. The external gear 14 is incorporated into the outer periphery of the eccentric portion 12a via the eccentric bearing 30 so as to be capable of oscillating. The eccentric bearing 30 may be a known bearing mechanism. The eccentric bearing 30 according to the present embodiment is a roller bearing. The external gears 14 internally mesh with the internal gear 16 while respectively oscillating. The outer periphery of the external gear 14 has corrugated teeth. The teeth move while coming into contact with the internal gear 16. In this manner, the external gear 14 can oscillate in a plane whose central axis is a normal line.

### (Inner Pin)

The external gear 14 has a plurality of (for example, nine) inner pin holes 36 formed at positions offset from an axis thereof . The inner pin 40 penetrates the inner pin hole 36. A cylindrical sleeve 40c is located in the outer periphery of the inner pin 40. The sleeve 40c functions as a sliding movement facilitator to facilitate sliding movement with the inner pin hole 36. An outer diameter of the sleeve 40c is smaller than an inner diameter of the inner pin hole 36 as much as twice the amount of eccentricity. A gap serving as a clearance for absorbing an oscillating component of the external gear 14 is disposed between the sleeve 40c and the inner pin 40. The inner pin 40 is always in contact with a portion of the inner pin hole 36 via the sleeve 40c. The inner pin 40 revolves around the axis of the input shaft 12 in synchronization with the rotation component of the external gear 14, and rotates the first and second carriers 18 and 20 around the axis of the input shaft 12. The inner pin 40 configures a pin-shaped member which contributes to power transmission between the first and second carriers 18 and 20 and the external gear 14. It is not essential to dispose the sleeve 40c in the outer periphery of the inner pin 40.

### (Internal Gear)

The internal gear 16 meshes with the external gear 14. The internal gear 16 according to the present embodiment has an internal gear main body 16a integrated with the casing 22 and outer pins 17 respectively located in a plurality of pin grooves formed at an interval in the circumferential direction in the internal gear main body 16a. The outer pin 17 is a columnar pin member rotatably supported by the internal gear main body 16a. The outer pin 17 configures internal teeth of the internal gear 16. The number of the outer pins 17 (the number of the internal teeth) of the internal gear 16 is slightly more than the number of external teeth of the external gear 14 (as many as one in this example).

### (Carrier)

The carriers 18 and 20 are located in a side portion in the axial direction of the external gear 14. The carriers 18 and 20 have a circular shape as a whole. The first carrier 18 is located in the side portion on the counter-input side of the external gear 14, and the second carrier 20 is located in the side portion on the input side of the external gear 14. The first carrier 18 is rotatably supported by the casing 22 via the first main bearing 24. The second carrier 20 is rotatably supported by the casing 22 via the second main bearing 26. The first carrier 18 rotatably supports the counter-input side of the input shaft 12 via the input shaft bearing 34. The second carrier 20 rotatably supports the input side of the input shaft 12 via the input shaft bearing 34.

The carriers 18 and 20 are joined to each other via the inner pin 40. The inner pin 40 according to the present embodiment extends in the axial direction from the input side of the first carrier 18 toward the second carrier 20. The inner pin 40 is formed integrally with the first carrier 18. The end portion on the input side of the inner pin 40 has a tap hole 40d drilled toward the counter-input side. The second carrier 20 has a drilled tap hole 20d penetrating in the axial direction at a position corresponding to the tap hole 40d. In a state where the inner pin 40 is brought into contact with the second carrier 20, the carriers 18 and 20 are joined to each other by screwing the bolt 96 into the tap hole 20d and the tap hole 40d.

The first carrier 18 functions as an output member that outputs rotational power to a driving target member 46. The casing 22 functions as a fixing target member fixed to an external member for supporting the gear motor 100. According to the present embodiment, the tap hole 18c is drilled toward the input side on the end surface on the counter-input side of the first carrier 18, and can join the driving target member 46 by using a bolt (not illustrated).

### (Main Bearing)

The first and second main bearings 24 and 26 may be any one of various known bearing mechanisms. The main bearing 24 and 26 according to the present embodiment is an angular ball bearing. The main bearings 24 and 26 respectively have a rolling element 42 and an outer ring 44, and do not have an inner ring. Each inner rolling surface of the main bearings 24 and 26 is formed on the first and second carriers 18 and 20. It is not essential to apply a preload to the main bearings 24 and 26, but the preload is applied thereto in the present embodiment. A washer 44s is located adjacent to the counter-input side of the second main bearing 26.

### (Casing)

The casing 22 is an outer shell of the speed reducer 10. The casing 22 according to the present embodiment has a hollow cylindrical shape as a whole, and the internal gear 16 is disposed in an inner peripheral portion thereof. In the example illustrated FIG. 1, the flange 22e is disposed in the outer peripheral portion of the casing 22. The flange 22e projects outward in the radial direction from the outer peripheral surface of the casing 22. The end surface on the input side of the flange 22e is formed to be flat, and comes into contact with the end surface on the counter-input side of the collar portion 52e of the motor housing 52. The flange 22e has the through-hole 22f which communicates with the through-hole 52f of the collar portion 52e. A plurality of the through-holes 22f may be provided.

### (Oil Seal)

An oil seal 48 is disposed in the gap of the speed reducer 10, if necessary. According to the present embodiment, the oil seals 48 are respectively disposed between the input shaft 12 and the carriers 18 and 20, and between the casing 22 and the carriers 18 and 20.

An operation of the speed reducer 10 configured as described above will be described. If the rotational power is transmitted from the motor 50 to the input shaft 12, the eccentric portion 12a of the input shaft 12 is rotated around the rotation center line passing through the input shaft 12, and the eccentric portion 12a causes the external gear 14 to oscillate. In this case, the external gear 14 oscillates so that its own axis is rotated around the rotation center line of the input shaft 12. If the external gear 14 oscillates, meshing positions of the external gear 14 and the outer pin 17 of the internal gear 16 are sequentially shifted. As a result, each time the input shaft 12 is rotated once, as much as the amount corresponding to a difference between the number of teeth of the external gear 14 and the number of the outer pins 17 of the internal gear 16, one of the external gear 14 and the internal gear 16 is rotated. According to the present embodiment, the external gear 14 is rotated, and the speed-reduced rotation is output from the first carrier 18. The first carrier 18 is rotated, thereby rotationally driving the driving target member 46 joined to the first carrier 18. Hitherto, the first embodiment has been described.

### [Second Embodiment]

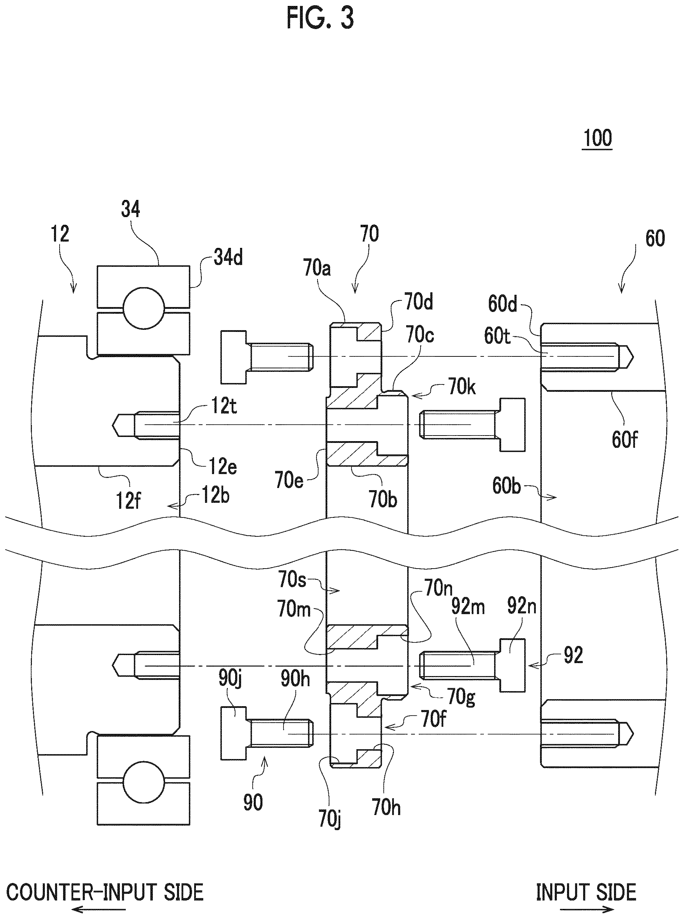

Next, a configuration of the gear motor 100 according to a second embodiment will be described. In the drawings and the description according to the second embodiment, the same reference numerals will be given to configuration elements or members which are the same as or equivalent to those according to the first embodiment. Repeated description of the first embodiment will be appropriately omitted, and configurations different from those according to the first embodiment will be focused on in the description. FIG. 3 is a side sectional view illustrating a periphery of the joining member 70 of the gear motor 100 according to the second embodiment, and corresponds to FIG. 2. The second embodiment is different from the first embodiment in that the motor shaft 60, the input shaft 12, and the joining member 70 have a different shape, and others have the same configuration. Therefore, repeated description will be omitted, and different points will be mainly described.

In the second embodiment, the motor shaft 60 will be described as one shaft, the input shaft 12 will be described as the other shaft, the motor shaft hollow portion 60b will be described as the first hollow portion, and the input shaft hollow portion 12b will be described as the third hollow portion.

In the first embodiment, with regard to a radius of the hollow portion, an example has been described in which the input shaft hollow portion 12b is larger than the motor shaft hollow portion 60b. However, in the second embodiment, the motor shaft hollow portion 60b is larger than the input shaft hollow portion 12b. In addition, in the second embodiment, the projection portion 70k projects to the input side from the first end surface 70d, and the spigot joint portion 70c is subjected to the spigot fitting to the motor shaft hollow portion 60b of the motor shaft 60. In addition, the first joint portion 70f according to the second embodiment is located outward of the second joint portion 70g in the radial direction. In this way, the present invention can adopt a configuration, even in a case where either the motor shaft 60 or the input shaft 12 is set as "one shaft". The motor shaft 60 of the motor 50 and the input shaft 12 of the speed reducer 10 can be joined to each other.

In the second embodiment having the above-described configuration, the gear motor 100 is operated similarly to the first embodiment. It is possible to achieve the same operations and advantageous effects which are the same as those according to the first embodiment.

### [Third Embodiment]

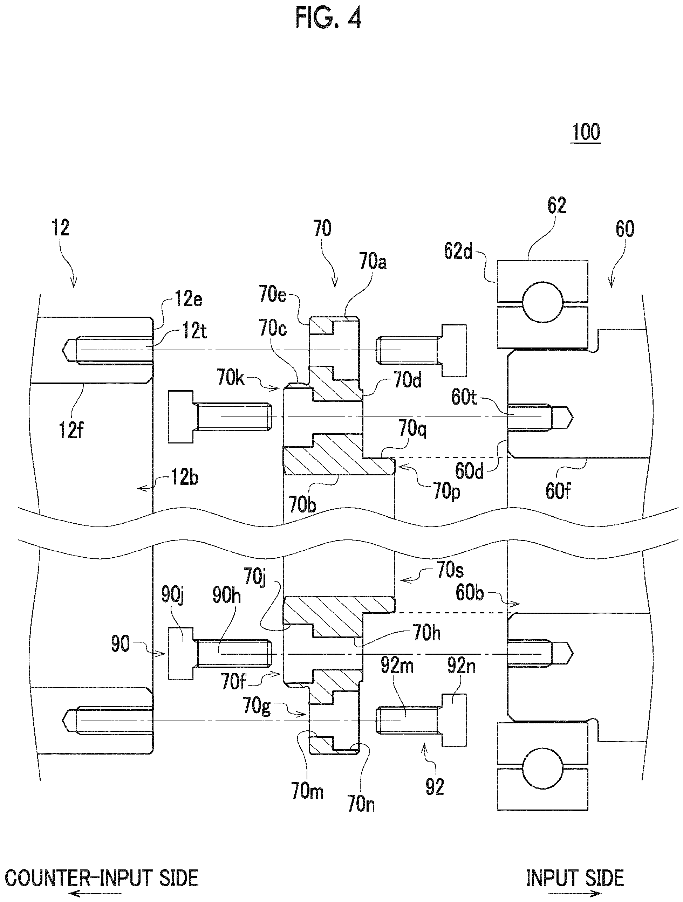

Next, a configuration of the gear motor 100 according to a third embodiment will be described. In the drawings and the description according to the third embodiment, the same reference numerals will be given to configuration elements or members which are the same as or equivalent to those according to the first embodiment. Repeated description of the first embodiment will be appropriately omitted, and configurations different from those according to the first embodiment will be focused on in the description. FIG. 4 is a side sectional view illustrating a periphery of the joining member 70 of the gear motor 100 according to the third embodiment, and corresponds to FIG. 2. The third embodiment is different from the first embodiment in that the joining member 70 has a different shape, and others have the same configuration. Therefore, repeated description will be omitted, and different points will be mainly described.

In the description according to the first embodiment, an example has been described in which the spigot joint portion for the spigot fitting to the motor shaft 60 or the input shaft 12 is disposed on the counter-input side of the joining member 70. However, the spigot joint portion configured in this way may be disposed on the input side of the joining member 70. Alternatively, the spigot joint portions may be respectively disposed on the input side and the counter-input side of the joining member 70. In the joining member 70 according to the third embodiment, the spigot j oint portions for the spigot fitting to the motor shaft 60 or the input shaft 12 to the input side and the counter-input side are respectively disposed on the input side and the counter-input side.

As illustrated in FIG. 4, the joining member 70 according to the third embodiment has a projection portion 70p projecting to the input side from the first end surface 70d on the input side. The projection portion 70p in this example is disposed in the most inner peripheral portion of the first end surface 70d. The outer peripheral surface of the projection portion 70p has a spigot joint portion 70q for the spigot fitting to an inner peripheral surface 60f of the motor shaft 60 (other shaft). The joining member 70 according to the present embodiment is also subjected to the spigot fitting to the motor shaft 60 in addition to the input shaft 12. Therefore, the axes of the input shaft 12 and the motor shaft 60 can be accurately aligned with each other by using the joining member 70.

In this configuration, it is desirable to increase a fitting gap between the outer peripheral surface 22h of the casing 22 of the speed reducer 10 and the fitting cylinder portion 52d of the cup-like portion 52c to such an extent that manufacturing variations can be tolerated.

In the third embodiment having the above-described configuration, the gear motor 100 is operated similarly to the first embodiment. It is possible to achieve the same operations and advantageous effects which are the same as those according to the first embodiment.

Hitherto, the embodiments according to the present invention have been described in detail. The respective embodiments described above are all merely specific examples for embodying the present invention. The contents of each embodiment do not limit the technical scope of the present invention. In addition, a hatched cross section in the drawing does not limit a material of a hatched object.

Hereinafter, modification examples will be described. In the drawings and the description according to the modification examples, the same reference numerals will be given to configuration elements or members which are the same as or equivalent to those according to the respective embodiments. Repeated description of the respective embodiments will be appropriately omitted, and configurations different from those according to the respective embodiments will be focused on in the description.

In the description according to the first embodiment, an example has been described in which the joining member 70 is the separate member from the motor shaft 60 and the input shaft 12. However, the present invention is not limited thereto. The joining member 70 may be formed integrally with either the motor shaft 60 or the input shaft 12. In this case, the number of manufacturing processes for separately forming the joining member 70 and the number of manufacturing processes for joining the joining member 70 can be reduced. In addition, mechanical strength of the joint portion can be improved. As an example, the joining member 70 and the input shaft 12 may be formed integrally with each other by means of cutting work.

In the description according to the first embodiment, an example has been described in which the joining member 70 is joined to the input shaft 12 (one shaft) by using the bolt 92. However, the present invention is not limited thereto. For example, the joining member 70 may be joined to the input shaft 12 by means of welding.

In the description according to the first embodiment, an example has been described in which the motor shaft 60, the input shaft 12, and the joining member 70 have the respective hollow portions which communicate with each other . However, the present invention is not limited thereto. It is not essential that the motor shaft 60 and the input shaft 12 respectively have the hollow portions. Any one of these (other shaft) may not have the hollow portion. It is not essential that the joining member 70 has the hollow portion. The joining member 70 may not have the hollow portion.

In the description according to the first embodiment, an example has been described in which the speed reducer is a so-called eccentric oscillating type speed reducer having a center crank type. However, without being limited thereto, the present invention can adopt various speed reduction mechanisms. For example, the speed reducer may be a so-called eccentric oscillating type speed reducer having a distribution type in which a plurality of crankshafts are arranged at positions offset from the axis of the internal gear.

In the description of the first embodiment, an example has been described in which the speed reducer is the eccentric oscillating type speed reducer. However, the present invention is not limited thereto. For example, the speed reducer may be a flexible meshing type speed reducer (referred to as a wave speed reducer, in some cases) having a cylindrical external gear. The speed reducer may be a flexible meshing type speed reducer having a cup type or silk hat type.

In the description according to the first embodiment, an example has been described in which two external gears 14 are provided. However, the present invention is not limited thereto . Three or more external gears 14 may be provided. For example, the input shaft may have three eccentric portions 12m which are respectively out of phase as much as 120°, and there may be provided three external gears 14 oscillating in three eccentric portions 12m. Alternatively, one external gear 14 may be provided.

According to the respective modification examples described above, it is possible to achieve the same operations and advantageous effects which are the same as those according to the respective embodiments described above.

### Brief Description of the Reference Symbols

10: speed reducer,
12: input shaft,
14: external gear,
16: internal gear,
18, 20: carrier,
24, 26: main bearing,
50: motor,
52, 54: motor housing,
60: motor shaft,
60b: motor shaft hollow portion,
62: motor bearing,
70: joining member,
70c, 70q: spigot joint portion,
70s: joint hollow portion,
90: bolt,
90j: head portion,
92: bolt,
92n: head portion,
100: gear motor

## Claims

1. A gear motor (100) comprising:
a motor (50) disposed on an input side which is one side in an axial direction;
a speed reducer (10) disposed on a counter-input side which is the other side in the axial direction; and
a joining member (70) located between a motor shaft (60) of the motor (50) and an input shaft (12) of the speed reducer (10),
the speed reducer (10) is driven by the motor (50) via the joining member (70),
at least one shaft of the motor shaft (60) and the input shaft (12) has a first hollow portion (12b) penetrating in the axial direction,
the one shaft of the motor shaft (60) and the input shaft (12), and the joining member (70) are joined to each other, and the other shaft of the motor shaft (60) and the input shaft (12), and the joining member (70) are joined to each other by a bolt (90) exposed to the first hollow portion (12b),
**characterized in that**
an axial end surface of the motor shaft (60) closest to the speed reducer (10) is disposed closer to the input side than an axial end surface of the input shaft (12) closest to the motor (50) .

2. The gear motor (100) according to claim 1,
wherein the joining member (70) has a spigot joint portion (70c, 70q) which is a separate member from the motor shaft (60) and the input shaft (12) so as to perform spigot fitting for joining the one shaft.

3. The gear motor (100) according to claim 2,
wherein the joining member (70) does not perform the spigot fitting for joining the other shaft.

4. The gear motor (100) according to claim 1,
wherein the joining member (70) is formed integrally with the one shaft.

5. The gear motor (100) according to any one of claims 1 to 4,
wherein the joining member (70) has a second hollow portion (70s) communicating with the first hollow portion (12b) of the one shaft, and the other shaft has a third hollow portion (60b) communicating with the second hollow portion (70s) of the joining member (70).

6. The gear motor (100) according to any one of claims 1 to 5,
wherein the joining member (70) is a separate member from the motor shaft (60) and the input shaft (12), the gear motor (100) includes a joining tool (92) for joining the joining member (70) and the one shaft to each other, and the joining tool (92) overlaps the other shaft when viewed in the axial direction of the motor shaft (60).

7. The gear motor (100) according to any one of claims 1 to 6,
wherein the joining member (70) regulates an axial movement of a bearing (62) disposed on the motor shaft (60).

## Patentansprüche

1. Getriebemotor (100), umfassend:
einen Motor (50), der auf einer Eingangsseite angeordnet ist, die eine Seite in einer Axialrichtung ist;
ein Untersetzungsgetriebe (10), das auf einer Gegeneingangsseite angeordnet ist, welche die andere Seite in der Axialrichtung ist; und
ein Verbindungselement (70), das sich zwischen einer Motorwelle (60) des Motors (50) und einer Eingangswelle (12) des Untersetzungsgetriebes (10) befindet,
wobei das Untersetzungsgetriebe (10) von dem Motor (50) via das Verbindungselement (70) angetrieben wird,
wobei mindestens eine Welle der Motorwelle (60) und der Eingangswelle (12) einen ersten Hohlabschnitt (12b) aufweist, der in der axialen Richtung durchdringt, wobei die eine Welle der Motorwelle (60) und der Eingangswelle (12), sowie das Verbindungselement (70) miteinander verbunden sind, und die andere Welle der Motorwelle (60) und der Eingangswelle (12), sowie das Verbindungselement (70) durch eine Schraube (90) miteinander verbunden sind, die zu dem ersten Hohlabschnitt (12b) hin freiliegt,
**dadurch gekennzeichnet, dass**
eine axiale Endfläche der Motorwelle (60), die dem Untersetzungsgetriebe (10) am nächsten ist, näher an der Eingangsseite angeordnet ist als eine axiale Endfläche der Eingangswelle (12), die dem Motor (50) am nächsten ist.

2. Getriebemotor (100) nach Anspruch 1,
wobei das Verbindungselement (70) einen Zapfenverbindungsabschnitt (70c, 70q) aufweist, der ein von der Motorwelle (60) und der Eingangswelle (12) separates Element ist, um Zapfenpassung zum Verbinden der einen Welle durchzuführen.

3. Getriebemotor (100) nach Anspruch 2,
wobei das Verbindungselement (70) die Zapfenpassung zum Verbinden der anderen Welle nicht durchführt.

4. Getriebemotor (100) nach Anspruch 1,
wobei das Verbindungselement (70) integral mit der einen Welle ausgebildet ist.

5. Getriebemotor (100) nach einem der Ansprüche 1 bis 4,
wobei das Verbindungselement (70) einen zweiten Hohlabschnitt (70s) aufweist, der mit dem ersten Hohlabschnitt (12b) der einen Welle in Verbindung steht, und die andere Welle einen dritten Hohlabschnitt (60b) aufweist, der mit dem zweiten Hohlabschnitt (70s) des Verbindungselements (70) in Verbindung steht.

6. Getriebemotor (100) nach einem der Ansprüche 1 bis 5,
wobei das Verbindungselement (70) ein von der Motorwelle (60) und der Eingangswelle (12) separates Element ist, der Getriebemotor (100) ein Verbindungswerkzeug (92) aufweist, um das Verbindungselement (70) und die eine Welle miteinander zu verbinden, und das Verbindungswerkzeug (92) die andere Welle in der axialen Richtung der Motorwelle (60) gesehen überlappt.

7. Getriebemotor (100) nach einem der Ansprüche 1 bis 6,
wobei das Verbindungselement (70) eine axiale Bewegung eines auf der Motorwelle (60) angeordneten Lagers (62) reguliert.

## Revendications

1. Un moteur à engrenages (100) comprenant :
un moteur (50) disposé d'un côté entrée qui est un côté dans une direction axiale ;
un réducteur de vitesse (10) disposé sur d'un côté entrée antagoniste qui est l'autre côté dans la direction axiale ; et
un élément d'assemblage (70) positionné entre un arbre de moteur (60) du moteur (50) et un arbre d'entrée (12) du réducteur de vitesse (10),
le réducteur de vitesse (10) est entraîné par le moteur (50) via l'élément d'assemblage (70),
au moins un arbre parmi l'arbre de moteur (60) et l'arbre d'entrée (12) a une première partie creuse (12b) pénétrant dans la direction axiale, le un arbre parmi l'arbre de moteur (60) et l'arbre d'entrée (12) et l'élément d'assemblage (70) sont assemblés entre eux, et l'autre arbre parmi l'arbre de moteur (60) et l'arbre d'entrée (12) et l'élément d'assemblage (70) sont assemblés entre eux par un boulon (90) exposé à la première partie creuse (12b),
**caractérisé en ce que** :
la surface d'extrémité axiale de l'arbre de moteur (60) la plus proche du réducteur de vitesse (10) est disposée plus proche du côté entrée que la surface d'extrémité axiale de l'arbre d'entrée (12) la plus proche du moteur (50).

2. Le moteur à engrenages (100) selon la revendication 1,
dans lequel l'élément d'assemblage (70) a une partie d'emboîtement en tulipe (70c, 70q) qui est un élément séparé de l'arbre de moteur (60) et de l'arbre d'entrée (12) afin de réaliser le raccord en tulipe pour assembler l'arbre.

3. Le moteur à engrenages (100) selon la revendication 2,
dans lequel l'élément d'assemblage (70) ne réalise pas le raccord en tulipe pour assembler l'autre arbre.

4. Le moteur à engrenages (100) selon la revendication 1,
dans lequel l'élément d'assemblage (70) est formé intégralement avec le un arbre.

5. Le moteur à engrenages (100) selon l'une quelconque des revendications 1 à 4,
dans lequel l'élément d'assemblage (70) a une deuxième partie creuse (70s) communiquant avec la première partie creuse (12b) de l'arbre, et l'autre arbre a une troisième partie creuse (60b) communiquant avec la deuxième partie creuse (70s) de l'élément d'assemblage (70).

6. Le moteur à engrenages (100) selon l'une quelconque des revendications 1 à 5,
dans lequel l'élément d'assemblage (70) est un élément séparé de l'arbre de moteur (60) et de l'arbre d'entrée (12), le moteur à engrenages (100) comprend un outil d'assemblage (92) pour assembler l'élément d'assemblage (70) et l'arbre entre eux, et l'outil d'assemblage (92) recouvre l'autre arbre, lorsqu'il est observé dans la direction axiale de l'arbre de moteur (60).

7. Le moteur à engrenages (100) selon l'une quelconque des revendications 1 à 6,
dans lequel l'élément d'assemblage (70) régule un mouvement axial d'un palier (62) disposé sur l'arbre de moteur (60).
